# EUROPEAN PATENT APPLICATION

(11) **EP 4 704 223 A1**
(43) Date of publication of application: **04.03.2026**
(21) Application number: 25187454.1
(22) Date of filing: 04.07.2025
(51) Int. Cl.: H01M 10/658, H01M 50/242, H01M 50/244

(54) **METHOD FOR POTTING BATTERY PACK, BATTERY PACK AND ELECTRICAL DEVICE**

(30) Priority: 30.08.2024 CN 202411216675
(71) Applicant: Xiaomi EV Technology Co., Ltd., 100176 Beijing (CN)
(72) Inventor: KANG, Lei, Beijing, 100176 (CN)
(74) Representative: Stöckeler, Ferdinand

(57) **Abstract**

A method for potting the battery pack includes: filling the accommodating chamber with a foam adhesive for a plurality of times prior to installation of the cover (3) to form a pre-potted structure formed by at least one filling of the foam adhesive and a post-potted structure formed by at least one filling of the foam adhesive, in which the battery assembly (2) is connected to the cover through the post-potted structure. A battery pack includes a case (1) having an accommodating chamber with an opening, a battery assembly (2) located in the accommodating chamber, a cover closing the opening, a pre-potted structure formed by foam adhesive and located in the accommodating chamber, and a post-potted structure formed by foam adhesive and located in the accommodating chamber. The battery assembly (2) is connected to the cover through the post-potted structure.

## Description

### FIELD

The present invention relates to the field of battery packs, and more particularly to a method for potting a battery pack, a battery pack, and an electrical device.

### BACKGROUND

Potting a battery pack refers to encapsulating all or parts of a battery in a protective material. In the related art, after the battery pack is potted, a problem of poor fitting between the cover and the case of the battery pack is prone to occur.

### SUMMARY

An objective of the present invention is to provide a method for potting a battery pack, a battery pack and an electrical device, to solve the problem of poor fitting between the cover and the case of the battery pack that is prone to occur after the battery pack is potted in the related art, and to effectively improve the achievability and the process stability of the potted design of the whole battery pack.

According to a first aspect of the present invention, there is provided a method for potting a battery pack, the battery pack includes a case, a battery assembly and a cover, the case includes an accommodating chamber having an opening, the battery assembly is located in the accommodating chamber, and the cover closes the opening. The method includes: filling the accommodating chamber with a foam adhesive for a plurality of times prior to installation of the cover to form a pre-potted structure formed by at least one filling of the foam adhesive and a post-potted structure formed by at least one filling of the foam adhesive, in which the battery assembly is connected to the cover through the post-potted structure.

Optionally, filling the accommodating chamber with the foam adhesive for the plurality of times to form the pre-potted structure formed by at least one filling of the foam adhesive and the post-potted structure formed by at least one filling of the foam adhesive includes: filling the foam adhesive in at least a part of a space between the battery assembly and a side wall of the accommodating chamber to form the pre-potted structure.

Optionally, the battery assembly includes a battery unit, the accommodating chamber has a first cavity located on at least one end of the battery assembly in a first direction, and the pre-potted structure is at least partially located in the first cavity.

Optionally, the accommodating chamber has a third cavity located on at least one end of the battery assembly in a second direction, and the first cavity has a volume greater than a volume of the third cavity.

Optionally, in a height direction of the battery pack, a highest point of a top face of the pre-potted structure is located below a top end of the battery unit, or a highest point of a top face of the pre-potted structure is flush with the top end of the battery unit.

Optionally, a distance between a lowest point of the top face of the pre-potted structure and the top end of the battery unit in the height direction is h, a size of the battery unit in the height direction is H, and h≤H*1/2.

Optionally, a size of the accommodating chamber in the height direction of the battery pack is H', a height of the highest point or a lowest point of the top face of the pre-potted structure relative to an inner bottom face of the accommodating chamber is L, and L≥H'*1/3.

Optionally, a size of the battery unit of the battery assembly in the height direction of the battery pack is H, and H' * 1/2<L<H.

Optionally, a size of the battery unit of the battery assembly in the height direction of the battery pack is H, and H≥H' *2/3.

Optionally, a distance between the highest point and a lowest point of the top face of the pre-potted structure in the height direction is less than a preset distance.

Optionally, the preset distance is 15 mm.

Optionally, filling the foam adhesive in at least a part of the space between the battery assembly and the side wall of the accommodating chamber to form the pre-potted structure includes: filling the foam adhesive in the at least a part of the space along a first preset trajectory.

Optionally, the battery pack further includes a second blocking structure, and the second blocking structure is configured to separate the at least a part of the space into a plurality of sub-filling cavities.

Optionally, the plurality of sub-filling cavities are spaced apart along the first preset trajectory.

Optionally, the pre-potted structure is formed by free rising of the foam adhesive.

Optionally, the accommodating chamber has a second cavity located between the battery assembly and the cover and between adjacent battery units of the battery assembly, and the post-potted structure includes a first post-potted structure located in the second cavity; and filling the accommodating chamber with the foam adhesive for the plurality of times to form the pre-potted structure formed by at least one filling of the foam adhesive and the post-potted structure formed by at least one filling of the foam adhesive includes: filling the foam adhesive in the second cavity to form the first post-potted structure.

Optionally, the method further includes: determining the second preset trajectory according to an arrangement manner of the battery units of the battery assembly.

Optionally, the battery assembly includes a plurality of groups of battery units arranged side-by-side along a length direction of the battery unit, and each group of the battery units includes a plurality of battery units arranged side-by-side along a thickness direction of the battery unit; and the second preset trajectory includes a first main trajectory and a first turning trajectory, a plurality of first main trajectories extend along the thickness direction of the battery unit and arranged side-by-side along the length direction of the battery unit, and two adjacent first main trajectories are connected through the first turning trajectory such that the second preset trajectory forms a serpentine trajectory.

Optionally, a first gap is defined between two adjacent battery units spaced apart along the length direction, the first gap forms a part of the second cavity, the first gap extends the thickness direction, and at least one first main trajectory passes through the first gap.

Optionally, an upper surface of the battery unit is provided with a pole post and a surface area adjacent to the pole post, at least one first main trajectory passes through the pole post, and the at least one first main trajectory passes through the surface area.

Optionally, the battery assembly includes a busbar assembly located above the battery unit, a second gap is defined between the busbar assembly and the cover, a third gap is defined between the busbar assembly and the battery unit, the busbar assembly has an adhesive injection port in communication with the second gap and the third gap, and at least one first main trajectory passes through the adhesive injection port.

Optionally, the first main trajectory has a first end and a second end opposite each other, the battery assembly has a first side wall adjacent to the first end and a second side wall adjacent to the second end along the thickness direction; the first end has a first preset distance from the first side wall, and the second end has a second preset distance from the second side wall.

Optionally, the method further includes: determining a value of the first preset distance and the second preset distance according to a difference between an actual operation time and a set operation of an adhesive outlet of an adhesive potting device at the first turning trajectory.

Optionally, a thickness of the battery unit is D, the value of the first preset distance and the second preset distance is D', and D'≥D*1/2 and D' ≤3D.

Optionally, the accommodating chamber has a first cavity located on at least one end of the battery assembly in a first direction, the accommodating chamber has a third cavity located on at least one end of the battery assembly in a second direction, the pre-potted structure is located in the first cavity, and the post-potted structure includes a second post-potted structure located in the third cavity and above the pre-potted structure; filling the accommodating chamber with the foam adhesive for the plurality of times to form the pre-potted structure formed by at least one filling of the foam adhesive and the post-potted structure formed by at least one filling of the foam adhesive includes: filling the foam adhesive in the first cavity and the third cavity along a third preset trajectory to form the second post-potted structure.

Optionally, the third preset trajectory is a loop trajectory extending along a circumferential direction of the battery assembly.

Optionally, the method further includes: after filling the foam adhesive in the second cavity along the second preset trajectory, filling the foam adhesive in the first cavity and the third cavity along the third preset trajectory.

Optionally, the method further includes: after the foam adhesive forming the pre-potted structure rises to a maximum volume, starting to fill the foam adhesive in the first cavity and the third cavity along the third preset trajectory.

Optionally, the method further includes: after the foam adhesive forming the pre-potted structure rises to a maximum volume and before the top face of the pre-potted structure is surface-dried, starting to fill the foam adhesive in the first cavity and the third cavity along the third preset trajectory.

According to a second aspect of the present invention, there is provided a battery pack, employing the method for potting the battery pack provided by the first aspect described above.

According to a third aspect of the present invention, there is provided a battery pack, including: a case including an accommodating chamber having an opening; a battery assembly located in the accommodating chamber; a cover closing the opening; a pre-potted structure formed by foam adhesive and located in the accommodating chamber; and a post-potted structure formed by the foam adhesive and located in the accommodating chamber, in which the battery assembly is connected to the cover through the post-potted structure.

Optionally, a projection of the post-potted structure in the height direction of the battery pack covers the pre-potted structure.

Optionally, the pre-potted structure and the post-potted structure are adhered.

Optionally, an adhering strength at an interface of the pre-potted structure and the post-potted structure is E, an adhering strength of the post-potted structure with the cover is F, and E>F.

Optionally, a draw/shear strength at an interface of the pre-potted structure and the post-potted structure is A, a draw/shear strength of a potting structure formed by the foam adhesive with no interface is B, and A>0.5B.

Optionally, the battery assembly includes a battery unit, the accommodating chamber has a first cavity located on at least one end of the battery assembly in a first direction, and the pre-potted structure is at least partially located in the first cavity.

Optionally, in a height direction of the battery pack, a highest point of a top face of the pre-potted structure is located below a top end of the battery unit, or a highest point of a top face of the pre-potted structure is flush with the top end of the battery unit.

Optionally, a distance between a lowest point of the top face of the pre-potted structure and the top end of the battery unit in the height direction is h, a size of the battery unit in the height direction is H, and h≤H*1/2.

Optionally, a size of the accommodating chamber in the height direction of the battery pack is H', a height of the highest point or a lowest point of the top face of the pre-potted structure relative to an inner bottom face of the accommodating chamber is L, and L≥H'*1/3.

Optionally, a size of the battery unit of the battery assembly in the height direction of the battery pack is H, and H' * 1/2<L<H.

Optionally, a size of the battery unit of the battery assembly in the height direction of the battery pack is H, and H≥H' *2/3.

Optionally, a distance between the highest point and a lowest point of the top face of the pre-potted structure in the height direction is less than a preset distance.

Optionally, the preset distance is 15 mm.

Optionally, the accommodating chamber has a second cavity located between the battery assembly and the cover and between adjacent battery units of the battery assembly, and a third cavity located on at least one end of the battery assembly along the second direction, and the post-potted structure includes a first post-potted structure located in the second cavity, and a second post-potted structure located in the third cavity and above the pre-potted structure.

Optionally, a density of the first post-potted structure, the second post-potted structure, and the pre-potted structure becomes sequentially smaller.

Optionally, the second post-potted structure includes a first structure located in the third cavity and a second structure above the pre-potted structure; and the density of the first post-potted structure, the first structure, the second structure, and the pre-potted structure becomes sequentially smaller.

Optionally, the battery pack further includes a first blocking structure, and the first blocking structure is configured to separate the first cavity, the second cavity and the third cavity.

Optionally, the battery pack further includes a second blocking structure, and the second blocking structure is configured to separate at least a part of the first cavity and/or at least a part of the third cavity into a plurality of sub-filling cavities.

According to a fourth aspect of the present invention, there is provided an electrical device, including a battery pack provided by the second aspect described above, or the battery pack provided by the third aspect described above.

Optionally, the electrical device is a vehicle.

By means of the above technical solution, the present invention provides a method for potting a battery pack, the method for potting the battery pack includes: filling the accommodating chamber with foam adhesive for a plurality of times before installation of the cover to form the pre-potted structure formed by at least one filling of the foam adhesive, and the post-potted structure formed by at least one filling of the foam adhesive, to ensure that the battery assembly is stably connected to the cover through the post-potted structure, which effectively improves the structural strength of the whole battery pack as well as facilitates the structural design of the whole pack, helps to improve the insulation performance of the whole pack as well as the consistency of thermal management and thermal safety, reduces the problem of poor fitting between the cover and the case of the battery pack that is prone to occur, for example, after the battery pack is plotted in the related art, and improves the achievability and process stability of the design of the whole pack of the battery pack.

Other features and advantages of the present invention will be described in detail in the subsequent detailed description section.

### BRIEF DESCRIPTION OF THE DRAWINGS

The accompanying drawings are used to provide further understanding of the present invention, and constitutes a part of the specification, and are intended to explain the present invention with the following specific implementations, but do not constitute a limitation to the present invention. In which:
FIG. 1 is an exploded view of a battery pack provided by an illustrative embodiment of the present invention.
FIG. 2 is an exploded view of a battery pack provided by an illustrative embodiment of the present invention, with a cover removed.
FIG. 3 is a partial enlarged view of part A in FIG. 2.
FIG. 4 is a top view of a battery pack provided by an illustrative embodiment of the present invention, with a cover removed and a blocking structure shown.
FIG. 5 is a sectional view taken along B-B in FIG. 4.
FIG. 6 is a top view of a battery pack provided by an illustrative embodiment of the present invention, with a cover removed and a second preset trajectory shown.
FIG. 7 is a top view of a battery pack provided by an illustrative embodiment of the present invention, with a cover removed and a fourth preset trajectory shown.
FIG. 8 is a schematic view of a partial structure of a battery pack provided by a second embodiment of the present invention.
FIG. 9 is a schematic view of a partial structure of a battery pack provided by a third embodiment of the present invention.
FIG. 10 is a schematic view of a partial structure of a battery pack provided by a fourth embodiment of the present invention.

### Reference numerals:

1-case; 110-opening; 120-accommodating chamber; 121-first cavity; 122-second cavity; 123-third cavity; 124-sub-filing cavity; 2-battery assembly; 210-battery unit; 211-pole post; 212-surface area; 220-busbar assembly; 221-adhesive injection port; 230-first side wall; 240-second side wall; 250-first gap; 260-second gap; 270-third gap; 280-battery module; 3-cover; 4-second preset trajectory; 410-first main trajectory; 411-first end; 412-second end; 420-first turning trajectory; 5-first blocking structure; 6-second blocking structure; 7-vehicle front end cavity; 8-fourth preset trajectory; 810-second main trajectory; 820-second turning trajectory; 9-foam adhesive; 910-pre-potted structure; 920-post-potted structure; 921-first post-potted structure; 922-second post-potted structure; 9221-first structure; 9222-second structure; 10-vehicle rear end cavity.

### DETAILED DESCRIPTION OF THE INVENTION

Specific embodiments of the present invention are described in detail below in conjunction with the accompanying drawings. It should be understood that the specific embodiments described herein are merely used to illustrate and explain the present invention, and are not intended to limit the present invention.

It should be noted that all actions to obtain signals, information or data in the present invention are performed in compliance with the corresponding data protection regulations and policies of the country in which they are located, and with authorization granted by the owner of the corresponding device.

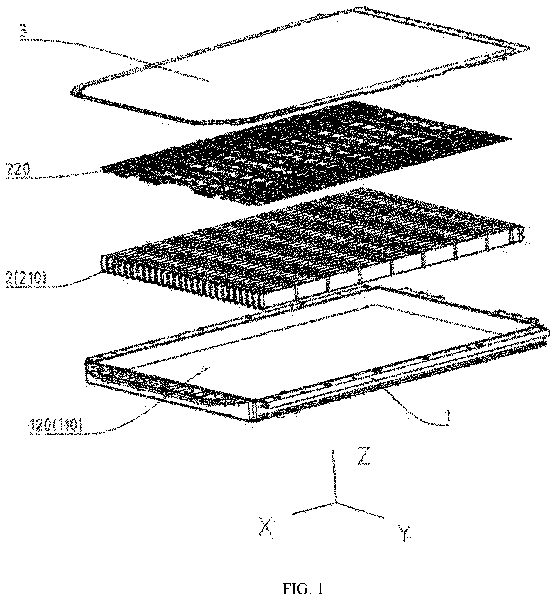

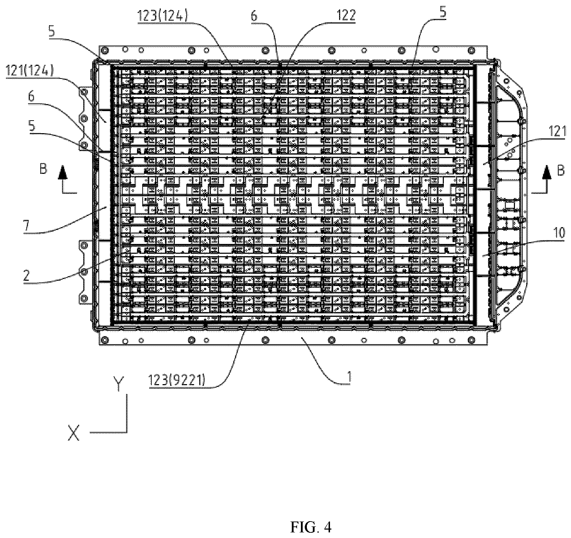

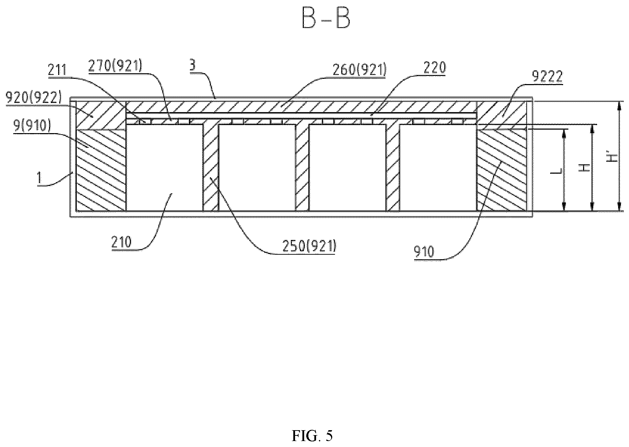

In the present invention, for ease of description, three coordinates, i.e., an XYZ coordinate system, are defined with respect to a battery pack, in which with reference to FIG. 1, the Y direction corresponds to a width direction of the battery pack, and may also be referenced to a second direction or referenced to the up-and-down direction in a drawing surface of FIG. 4; the X direction corresponds to the length direction of the battery pack, and may also be referenced to a first direction or referenced to the left-and-right direction in the drawing surface of FIG. 4; and the Z direction corresponds to the height direction of the battery pack, and also may be referenced to a direction perpendicular to the drawing surface of FIG. 4 or referenced to an up-and-down direction in the drawing surface of FIG. 5. In the absence of any indication to the contrary, the use of an azimuthal term such as "up or down" usually means up or down in the space of the battery pack when it is in use. "Inner or outer" means inner or outer in relation to the contour of the component or structure itself. It should be noted that the terms used, such as "first, second", are intended to distinguish one element from another and are not sequential or significant. Further, in the description with reference to the accompanying drawings, the same reference numeral in the different accompanying drawings indicates the same elements.

The inventor has found that, in the related art, the battery pack is usually potted with adhesive by way of single full potting, but the above mentioned adhesive potting manner of single full potting, due to the large total potting volume in the battery pack, makes a rising time of the foam adhesive in the battery pack usually shorter than a total time of the potting plus fitting of the cover and the clamping of the fixture for the single full potting. In other words, it is understandable that when the cover of the battery pack is fitted, the foam adhesive has already started to rise, even to its maximum volume, and there is even a risk that it will rise to the outside of the accommodating chamber of the battery pack, thus when a field personnel are fitting the cover of the battery pack, a problem of poor fitting between the cover and the case of the battery pack is prone to occur.

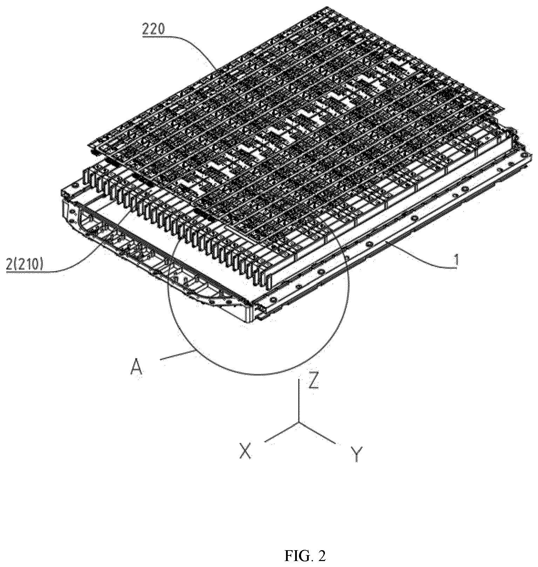

To this end, according to a first aspect of the present invention, there is provided a method for potting a battery pack. With reference to FIGS. 1 to 7, the battery pack includes a case 1, a battery assembly 2 and a cover 3. The case 1 includes an accommodating chamber 120 having an opening 110, the battery assembly 2 is located in the accommodating chamber 120, and the cover 3 closes the opening 11. The method for potting the battery pack includes: filling the accommodating chamber 120 with foam adhesive 9 for a plurality of times prior to installation of the cover 3, to form a pre-potted structure 910 formed by at least one filling of the foam adhesive 9 and a post-potted structure 920 formed by at least one filling of the foam adhesive 9, in which the battery assembly 2 is connected to the cover 3 through the post-potted structure 920.

By means of the above technical solution, the present invention provides a method for potting a battery pack, the method for potting the battery pack includes: filling the accommodating chamber 120 with foam adhesive 9 for a plurality of times before installation of the cover 3 to form the pre-potted structure 910 formed by at least one filling of the foam adhesive 9, and the post-potted structure 920 formed by at least one filling of the foam adhesive 9, to ensure that the battery assembly 2 is stably connected to the cover 3 through the post-potted structure 920, which effectively improves the structural strength of the whole battery pack as well as facilitates the structural design of the whole pack, helps to improve the insulation performance of the whole pack as well as the consistency of thermal management and thermal safety, reduces the problem of poor fitting between the cover and the case of the battery pack that is prone to occur, for example, after the battery pack is plotted in the related art, and improves the achievability and process stability of the design of the whole pack of the battery pack.

It should be noted that in the related art, the potting manner of the single full potting, due to the large volume of the area needing to be filled with the foam adhesive in the accommodating chamber of the battery pack, makes a rising time of the foam adhesive in the battery pack usually shorter than a total time of the potting plus fitting of the cover and the clamping of the fixture for the single full potting, easily causing a problem of poor fitting of the cover of the battery pack. In other words, it is understandable that the potting manner of the single full potting in the related art generally includes operations such as adhesive potting, cover fitting, fixture clamping, etc., but due to the large volume of the area needing to be filled with the foam adhesive in the battery pack, a total time for a single adhesive potting takes up a large percentage of the total time for adhesive potting, cover fitting and fixture clamping. Thus, when field personnel perform the cover fitting, the foam adhesive has already started to rise, even to its maximum volume, and there is even a risk that it will rise to the outside of the accommodating chamber of the battery pack, a problem of poor fitting between the cover and the case of the battery pack is prone to occur.

In order to solve the above problem, the present invention employs the plotting method of filling the accommodating chamber 120 of the battery pack with the foam adhesive 9 in several times to realize filling a part of the space in the accommodating chamber 120 with the foam adhesive 9 first, such as forming the pre-potted structure 910 as described above. Since the pre-potting is a part of the space in the battery pack being filled with the foam adhesive 9 and a subsequent adhesive potting operation is required, in contrast to the potting manner of a single full-potting in the related art, the potting time of the pre-potting in the adhesive potting manner of potting in several times is designed independently, that is to say, the total time for potting plus cover fitting and the fixture clamping for the single full potting in the related art is equivalent in the present invention to a total time of a filling time of the adhesive volume required for filling the post-potted structure 920 (which can be understood as the last adhesive potting operation before the cover fitting) plus the cover fitting and the fixture clamping in the potting manner of the potting in several times. Usually the time for the cover fitting and the fixture clamping is fixed. By means of the potting in several times, it is equivalent to significantly shorten the time needed for adhesive potting, and greatly reduce the risk of poor fitting between the cover 3 and the case 1 due to a premature rise of the foam adhesive.

In summary, in the present invention, since the potting in several times can first partially pre-pot the whole pack, the volume of the area in the accommodating chamber 120 of the battery pack that needs to be filled with the foam adhesive 9 during the next potting operation (the adhesive volume required for filling the post-potted structure 920) can be reduced, so that, during the next potting operation described above (which can be understood as the last potting operation before the cover fitting), the total time of an adhesive potting time used for the adhesive volume required for filling the post-potted structure 920 (which can be understood as the last adhesive potting operation before the cover fitting) plus the cover fitting and the fixture clamping in the potting manner of the potting in several times can be significantly less than the total time for the potting, the cover fitting and the fixture clamping in the related art. Particularly, the adhesive potting time is greatly reduced. Thus, when fitting the cover in the field, the foam adhesive 9 used to form the post-potted structure 920 has not yet risen, or has just begun to rise, so that the problem of poor fitting of the cover will not occur, and after the installation of the cover 3 is completed, a high-strength adhesive bond can be formed between the inner surface of the cover 3 and the foam adhesive 9 after it completes the rising, which ensures that the battery assembly 2 is stably connected to the cover 3 through the foam adhesive, effectively improves the structural strength of the whole battery pack as well as facilitates the structured design of the whole pack, and helps to improve the insulation performance of the whole pack as well as improves the consistency of the thermal management and the thermal safety.

Additionally, it should also be noted that in the potting manner of filling the accommodating chamber 120 with the foam adhesive 9 for a plurality of times, the total number of times is not specifically limited, the present invention will be described in terms of filling the accommodating chamber 120 with the foam adhesive 9 for two times, i.e., the first time the accommodating chamber 120 is filled with the foam adhesive 9 to form the pre-potted structure 910 described above, and the second time the accommodating chamber 120 is filled with the foam adhesive 9 to form the post-potted structure 920 described above, to ensure a high adhering strength at the adhering interface of the pre-potted structure 910 and the post-potted structure 920, which effectively improves the structural strength of the whole battery pack. Of course, the present invention is not limited thereto. For example, in some other embodiments, the total number of times mentioned above may be, for example, three times or four times, etc., and the present invention does not specifically limit the number of times the foam adhesive 9 is filled to form the pre-potted structures 910 for the corresponding number of times and the number of times the foam adhesive 9 is filled to form the post-potted structures 920 for the corresponding number of times, and the person skilled in the art can adaptively adjust the number of times according to the total number of times, the purpose of which is to ensure that the adhering interface between the pre-potted structure 910 and the pre-potted structure 910, or the adhering interface between the pre-potted structure 910 and the post-potted structure 920, or the adhering interface between the post-potted structure 920 and the post-potted structure 920 has a high adhesive strength, to improve the structural strength of the whole battery pack.

In addition, since the present invention can realize saturated potting and filling of each gap area in the battery pack by filling the accommodating chamber 120 of the battery pack with the foam adhesive 9 in several times, the potting effect is improved, which helps to improve the structural strength of the whole battery pack.

In some embodiments, as illustrated in FIGS. 4 and 5, filling the accommodating chamber 120 with the foam adhesive 9 for the plurality of times to form the pre-potted structure 910 formed by at least one filling of the foam adhesive 9 and the post-potted structure 920 formed by at least one filling of the foam adhesive 9 includes: filling the foam adhesive 9 in at least a part of the space between the battery assembly 2 and the side wall of the accommodating chamber 120 to form the pre-potted structure 910. Thus, the present invention pre-fills the foam adhesive 9 in at least a part of the space between the battery assembly 2 and the side wall of the accommodating chamber 120, which can effectively reduce the volume of remaining spatial area in the battery pack that needs to be filled with the foam adhesive 9 to achieve the purpose of effectively shortening the adhesive potting time used for the adhesive volume required for filling the post-potted structure 920, reduce the occurrence of the problem of poor fitting of the cover 3, improve the achievability and process stability of the potting design of the whole battery pack, and effectively improve the structural strength of the whole battery pack as well as facilitate the structural design of the whole pack.

By way of example, as illustrated in FIGS. 4 and 5, the battery assembly 2 may include a battery unit 210, the accommodating chamber 120 has a first cavity 121 located on at least one end of the battery assembly 2 in a first direction (reference may be made to a left-and-right direction in the drawing surface of FIG. 4), and the pre-potted structure 910 is at least partially located in the first cavity 121, to achieve the purpose of pre-potting, which can effectively reduce the volume of remaining spatial area in the battery pack that needs to be filled with the foam adhesive 9, effectively shorten the adhesive potting time used for the adhesive volume required for filling the post-potted structure 920, and reduce the occurrence of the problem of poor fitting of the cover 3.

In addition, in some embodiments, as illustrated in FIG. 4, the accommodating chamber 120 has a third cavity 123 located on at least one end of the battery assembly 2 in a second direction (reference may be made to an up-and-down direction in the drawing surface of FIG. 4), and the first cavity 121 has a volume greater than a volume of the third cavity 123. Thus, the pre-potting is performed first in the first cavity 121 with relatively large volume, which can effectively reduce the volume of remaining spatial area in the battery pack that needs to be filled with the foam adhesive 9, to achieve the purpose of effectively shortening the adhesive potting time used for the adhesive volume required for filling the post-potted structure 920, and reduce the occurrence of the problem of poor fitting of the cover 3.

It should be noted that the battery assembly 2 may be placed in the accommodating chamber 120 in the case 1 such as in a positive or inverted manner. By way of example, FIG. 4 illustrates that after assembly of the battery assembly 2 and the case 1 is completed, the accommodating chamber 120 may form two first cavities 121 located at two opposite ends of the battery assembly 2 in the first direction, i.e., a vehicle front end cavity 7 located at a left side and a vehicle rear end cavity 10 located at a right side as illustrated in FIG. 4. Simultaneously, the accommodating chamber 120 further forms two third cavities 123 located at two opposite ends of the battery assembly 2 in the second direction, i.e., the gap areas located at the side faces of the battery assembly 2 as illustrated in FIG. 4. A volume of the spatial area that needs to be filled with the foam adhesive of the two first cavities 121 (e.g., the vehicle front end cavity 7 and the vehicle rear end cavity 10) is greater than a volume of the spatial area that needs to be filled with the foam adhesive of the two third cavities 123 (e.g., the gap areas of the side faces of the battery assembly 2). Thus, the pre-potting is performed in the vehicle front end cavity 7 and the vehicle rear end cavity 10 having the relatively large volume of the spatial area that needs to be filled with the foam adhesive 9 first, which can effectively reduce the volume of remaining spatial area in the battery pack that needs to be filled with the foam adhesive 9 to achieve the purpose of effectively shortening the adhesive potting time used for the adhesive volume required for filling the post-potted structure 920, reduce the occurrence of the problem of poor fitting of the cover 3, improve the achievability and process stability of the potting design of the whole battery pack, and effectively improve the structural strength of the whole battery pack as well as facilitate the structural design of the whole pack.

In addition, considering that during the pre-potting operation of the two first cavities 121, since the foam adhesive 9 is usually a fluid adhesive liquid in a liquid form when injected into the first cavities 121 and before the foam adhesive 9 rises, in order to minimize the possibility of the adhesive liquid flowing abnormally to other areas (e.g., the second cavity 122 between the battery assembly 2 and the cover 3), in some embodiments, in the height direction of the battery pack (reference may be made to a direction perpendicular to the drawing surface of FIG. 4), the highest point of the top face of the pre-potted structure 910 is located below the top end of the battery unit 210, or the highest point of the top face of the pre-potted structure 910 is flush with the top end of the battery unit 210, to minimize the occurrence of the problem of the adhesive liquid abnormally flowing to other areas, to ensure that the adhesive liquid is uniformly distributed, and to improve the potting effect. The top end of the battery unit 210 may be understood as a top wall face of a casing of the battery unit in a height direction of the battery pack, as illustrated in FIG. 5, a distance between the top end/ the top wall face of the battery unit 210 and an inner wall face of the accommodating chamber 120 is H (or understood as a size H of the battery unit 210 in the height direction as described below).

In addition, considering that in order to be able to better realize potting in several times to achieve the purpose of shortening, for example, the adhesive potting time used for the last adhesive potting, in some embodiments, the distance between the lowest point of the top face of the pre-potted structure 910 and the top end of the battery unit 210 in the height direction of the battery pack (reference may be made to the direction perpendicular to the drawing surface of FIG. 4 or the up-and-down direction in the drawing surface of FIG. 5) may be h, and the size of the battery unit 210 in the height direction of the battery pack (reference may be made to the direction perpendicular to the drawing surface of FIG. 4 or the up-and-down direction in the drawing surface of FIG. 5) may be H, and h ≤ H * 1/2. Thus, the position of the lowest point of the top face of the pre-potted structure is controlled to facilitate the realization of potting in several times to achieve the purpose of shortening
the adhesive potting time used for the last adhesive potting, which improves the achievability and process stability of the potting design of the whole battery pack, and effectively improves the structural strength of the whole battery pack as well as facilitates the structural design of the whole pack.

In addition, in some embodiments, a size of the accommodating chamber 120 in the height direction of the battery pack may be H', a height of the highest point or the lowest point of the top face of the pre-potted structure 910 relative to the inner bottom face of the accommodating chamber 120 is L, and L≥H'*1/3. Thus, after the pre-potting operation, the volume of the remaining spatial area in the battery pack that needs to be filled with the foam adhesive 9 can be effectively reduced, to achieve the purpose of effectively shortening the adhesive potting time used for the adhesive volume required for filling the post-potted structure 920.

By way of example, in some embodiments, the size of the battery unit 210 of the battery assembly 2 in the height direction of the battery pack is H, it is possible to make H'* 1/2<L<H, to facilitate the adhesive potting operation in the field, and to achieve that the adhesive potting time used for the adhesive volume required for filling the post-potted structure 920. In addition, for structuring and lightweight design of the whole battery pack, in some embodiments, when a size of the battery unit 210 of the battery assembly 2 in the height direction of the battery pack is H, it is possible to make H ≥ H'*2/3, to facilitate structuring and lightweight design of the whole battery pack.

In addition, considering that the adhesive liquid has fluidity, when filling the adhesive liquid above the pre-potted structure 910, if a large depression exists on the top face of the pre-potted structure 910, it will make the adhesive liquid flow to the depression, resulting in the accumulation of the adhesive liquid, leading to a poor uniform distribution of the adhesive liquid, and when the adhesive liquid adopts the foam adhesive 9, the foam adhesive 9 will rise and expand to form a part of the post-potted structure 920, which will make the top face of the post-potted structure 920 more uneven, thus making the adhesive area of the post-potted structure 920 and the cover 3 smaller. Thus, in embodiments provided in the present invention, a distance between the highest point and the lowest point of the top face of the pre-potted structure 910 in the height direction may be less than a preset distance, and for example, the preset distance may be 10 mm or 15 mm. Thus, the flatness of the top face of the pre-potted structure 910 may be made to meet the requirements, to make it possible to reduce the flow of the adhesive liquid when the adhesive liquid is filled on the top face of the pre-potted structure 910, to improve the uniform distribution of the adhesive liquid. Thus, after the adhesive liquid rises to form a part of the post-potted structure 920, an adhering area between the part of the post-potted structure 920 and the cover 3 may be increased, to ensure that the adhering interface between the pre-potted structure 910 and the post-potted structure 920 has a high adhering strength, and to improve the structural strength of the whole battery pack.

In some embodiments, filling the foam adhesive 9 in at least a part of the space between the battery assembly 2 and the side wall of the accommodating chamber 120 to form the pre-potted structure 910 includes: filling the foam adhesive 9 in the at least a part of the space along a first preset trajectory, to facilitate operation by controlling, for example, an adhesive outlet of the potting device to realize the adhesive potting along the first preset trajectory to form the pre-potted structure 910 described above.

The present invention does not specifically limit the specific trajectory route of the first preset trajectory, and the person skilled in the art may adaptively design the first preset trajectory according to the needs of practical applications, for example, by controlling the robotic arm of the potting device along the first preset trajectory of the first preset trajectory in a form of the straight line trajectory to realize the adhesive potting operation of the accommodating chamber 120 to form the pre-potted structure 910. That is, it may be understood that as illustrated in FIG. 4, the adhesive outlet of the potting device can realize the pre-potting operation along the straight line trajectory (e.g., along the surface of FIG. 4 from top to bottom or from bottom to top) to complete the pre-potting operation on the spatial area of the two first cavities 121 (e.g., the vehicle front end cavity 7 and the vehicle rear end cavity 10) that needs to be filled with the foam adhesive 9, respectively, and that conducting the pre-potting operation along the straight line trajectory can realize the reduction of the problem of non-uniform distribution of the adhesive liquid potting to increase the potting effect.

In addition, in some embodiments, as illustrated in FIG. 4, the battery pack may also include a second blocking structure 6, the second blocking structure 6 is configured to separate at least a part of the space into a plurality of sub-filling cavities 124, and the plurality of sub-filling cavities 124 are spaced apart along the first preset trajectory, which is conducive to improving the uniform distribution of the adhesive liquid in the area of the individual sub-filling cavities 124, so that the uniformity of the height of the foam adhesive 9 filled in the pre-potting after rising is ensured to ensure a high adhering strength at the adhering interface between the pre-potted structure 910 and the post-potted structure 920.

In addition, the above-described pre-potted structure 910 is formed by free rising of the foam adhesive 9 (e.g., by automatically expanding the foam adhesive 9 in an open space to reach the maximum volume and curing, forming the above-described pre-potted structure 910). Thus, compared with the limiting manner of using e.g., an upper mold pressing down of the mold, the free rising manner can make the adhesive strength at the adhesive interface formed by the operation of the foam adhesive 9 in the several times higher, which is convenient for the continuous production operation in the field, because the disadvantage of the limiting manner of using an upper mold pressing down of the mold to realize the control of the height of the rising of the foam adhesive 9 is that it needs to be demolded, and it needs to be cured to reach a certain strength before demolding and it needs a few hours to be cured, which is not conducive to continuous production, and in order to facilitate demolding, it is necessary to provide, for example, a release agent between the foam adhesive 9 and the mold, which leads to the adhering strength of the foam adhesive interface formed after demolding being lower than the adhering strength of the foam adhesive interface of the free rising manner.

In addition, in some embodiments, before filling the foam adhesive 9 in at least a part of the space along the first preset trajectory, it may also include: performing trial operation of the adhesive potting device along the first preset trajectory, for example, debugging the first preset trajectory, the movement rate of the adhesive outlet of the adhesive potting device, and so on, and the adhesive potting device may not dispense the adhesive during the trial operation, so that after ensuring that the parameters of the trajectory as well as the movement rate, and so on, are correct, the pre-potting operation can be formally carried out, which helps to control the adhesive potting device to carry out the adhesive potting operation in the first cavity 121 in accordance with the predetermined first preset trajectory and the movement rate of the adhesive outlet of the adhesive potting device.

In some embodiments, as illustrated in FIGS. 4 and 5, the accommodating chamber 120 may include a second cavity 122 located between the battery assembly 2 and the cover 3 and between adjacent battery units 210 of the battery assembly 2, and the post-potted structure 920 includes a first post-potted structure 921 located in the second cavity 122; filling the accommodating chamber 120 with the foam adhesive 9 for the plurality of times to form the pre-potted structure 910 formed by the at least one filling of the foam adhesive 9 and the post-potted structure 920 formed by at least one filling of the foam adhesive 9 includes: filling the foam adhesive 9 in the second cavity 122 along the second preset trajectory 4 to form the first post-potted structure 921. Thus, for example the adhesive outlet of the potting device is controlled to carry out the adhesive potting along the second preset trajectory 4, to form the first post-potted structure 921, which facilitates operation.

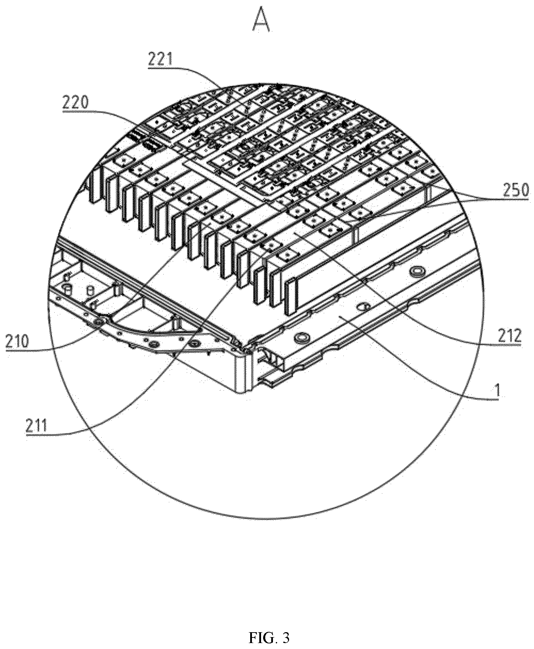

For example, FIG. 3 illustrates an arrangement of the plurality of battery units 210 of the battery assembly 2, i.e., the battery assembly 2 may include a plurality of groups of battery units 210 arranged side-by-side along a length direction of the battery unit 210, each group of battery units 210 includes a plurality of battery units 210 arranged side-by-side along a thickness direction of the battery unit 210, the length direction of each battery unit 210 is parallel to the first direction described above, the thickness direction of the battery unit 210 is parallel to the second direction described above, and the height direction of the battery unit 210 is parallel to the height direction of the battery pack. In the present embodiment, the battery unit 210 is a battery cell, also known as a cell, which is the smallest source of discharge power within the battery pack, and includes a positive electrode, a negative electrode, a separator and a cell casing, etc.

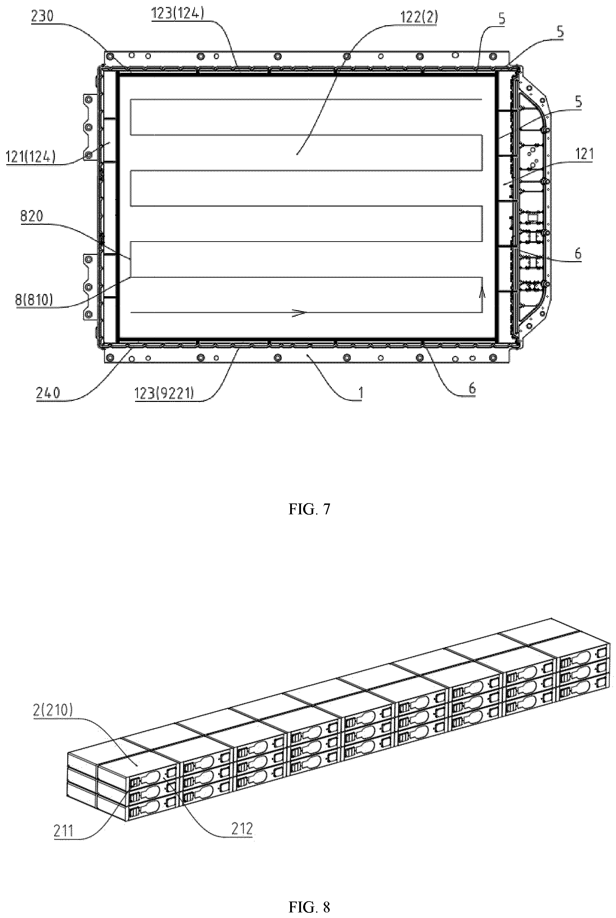

Of course, the specific embodiment of the battery assembly 2 is illustrative. In some other embodiments, the plurality of battery units 210 of the battery assembly 2 are arranged in a manner illustrated in FIG. 8, that is, the battery assembly 2 may include a plurality of groups of battery units 210 arranged side-by-side along a length direction of the battery unit 210, each group of battery units 210 includes a plurality of battery units 210 arranged side-by-side along a height direction of the battery unit 210, and a plurality of groups of battery units 210 are stacked in the height direction of the battery pack. The length direction of each battery unit 210 is parallel to the first direction described above, the thickness direction of the battery unit 210 is parallel to the height direction of the battery pack, and the height direction of the battery unit 210 is parallel to the second direction described above. In the present embodiment, the battery unit 210 is a battery cell, also known as a cell, which is the smallest source of discharge power within the battery pack, and includes a positive electrode, a negative electrode, a separator and a cell casing, etc.

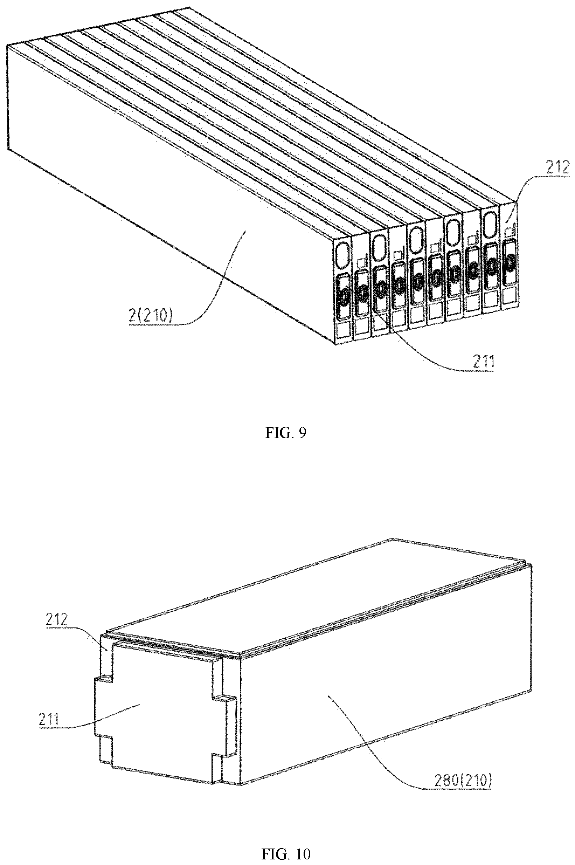

Alternatively, in some other embodiments, the battery assembly 2 may also include a plurality of battery units 210 arranged side-by-side in the first direction and/or the second direction. Referring to FIG. 9, each battery unit 210 is constructed as a blade battery cell, or, referring to FIG. 10, each battery unit 210 is constructed as a battery module 280, and each battery module 280 is constructed to include a casing and a plurality of battery cells provided in the casing. The battery cell is also known as a cell, which is the smallest source of discharge power within the battery pack, and includes a positive electrode, a negative electrode, a separator and a cell casing, etc. The present invention does not specifically limit the above deformation, and the person skilled in the art may adaptively design the specific arrangement form of the battery assembly 2 according to the actual application requirements.

In some embodiments, the method for potting a battery pack further includes: determining a second preset trajectory 4 according to the arrangement manner of the battery units 210 of the battery assembly 2. For example, the present invention is described in terms of the arrangement manner of the battery units 210 of the battery assembly 2 illustrated in FIG. 3, as follows.

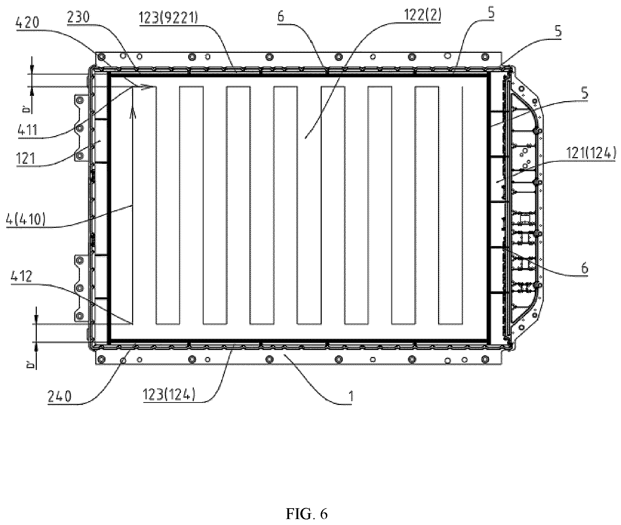

For example, the adhesive potting operation may be performed along the second preset trajectory 4 illustrated in FIG. 6. By way of example, as illustrated in FIG. 6, the second preset trajectory 4 may include a first main trajectory 410 and a first turning trajectory 420, the plurality of first main trajectories 410 extend in the thickness direction of the battery unit 210 and are arranged side-by-side in the length direction of the battery unit 210, and the two adjacent first main trajectories 410 are connected through the first turning trajectory 420 such that the second preset trajectory 4 forms a serpentine trajectory.

Accordingly, a specific arrangement form of the second preset trajectory 4 is determined in conjunction with the arrangement manner of the battery units 210 of the battery assembly 2, and the adhesive outlet of the adhesive potting device is controlled to perform the adhesive potting operation along the second preset trajectory 4. Specifically, as illustrated in FIGS. 3 to 6, a first gap 250 is defined between the two adjacent battery units 210 spaced apart in a length direction, the first gap 250 forms a part of the second cavity 122, and the first gap 250 extends in the thickness direction. In addition, an upper surface of the battery unit 210 is provided with a pole post 211 and a surface area 212 adjacent to the pole post 211, the battery assembly 2 includes a busbar assembly 220 located above the battery unit 210, a second gap 260 is defined between the busbar assembly 220 and the cover 3, a third gap 270 is defined between the busbar assembly 220 and the battery unit 210, and the busbar assembly 220 has an adhesive injection port 221 in communication with the second gap 260 and the third gap 270. Therefore, in order to realize saturated adhesive potting in the second cavity 122 formed by the above-described first gap 250, the pole post 211, and the surface area 212 adjacent to the pole post 211, the second gap 260, and the third gap 270, etc., such that at least one first main trajectory 410 passes through the first gap 250, the at least one first main trajectory 410 passes through the surface area 212, the at least one first main trajectory 410 passes through the pole post 211, and the at least one first main trajectory 410 passes through the adhesive injection port 221, to achieve the purpose of saturated adhesive potting within the second cavity 122.

It is also possible that, in an alternative embodiment, in order to facilitate distinguishing the moving trajectories in FIGS. 6 and 7, the second preset trajectory 4 may also be represented in FIG. 7 as a fourth preset trajectory 8, and when filling the second cavity 122 with the foam adhesive 9, the adhesive potting operation may be performed by controlling the adhesive outlet of the adhesive potting device along the fourth preset trajectory 8 illustrated in FIG. 7, the second main trajectory 810 of the fourth preset trajectory 8 extends along the length direction of the battery unit 210 and are arranged side-by-side along the thickness direction of the battery unit 210 (reference may be made to the up-and-down direction of the drawing surface in FIG. 4), and two adjacent second main trajectories 810 are connected through a second turning trajectory 820.

It should be noted that, due to the arrangement manner of the battery units 210 of the battery assembly 2 as described above, i.e., as illustrated in FIGS. 3 and 4, when the adhesive injection port of the adhesive potting device is controlled to perform the adhesive potting operation described above along the fourth preset trajectory 8 illustrated in FIG. 7, the second main trajectory 810 passes through, for example, the pole post 211, the surface area 212, the first gap 250, and the adhesive injection port 221 in turn. However, due to the different sizes of the gap areas formed by different structures, the above-mentioned control of the adhesive outlet of the adhesive potting device to perform the above-mentioned adhesive potting operation along the fourth preset trajectory 8 may easily result in the problem that a part of the area cannot be filled to saturation and the other part of the area has an excessive adhesive volume; moreover, in order to realize the saturated filling of the various parts of the area, it is necessary to adjust the operation rate and the volume of dispensing adhesive, etc., of the adhesive outlet of the adhesive potting device along the second main trajectory 810, greatly increasing the design difficulty of the adhesive potting process and/or the adhesive potting trajectory.

When controlling the adhesive outlet of the adhesive potting device to perform the adhesive potting operation along the second preset trajectory 4 illustrated in FIG. 6, since a single trajectory of the first main trajectory 410 passes through a plurality of pole posts 211 arranged side-by-side, or a plurality of surface areas 212 arranged side-by-side, or a plurality of first gaps 250 arranged side-by-side, or a plurality of adhesive injection ports 221 arranged side-by-side in the thickness direction of the battery unit 210. Thus, it is possible to realize the saturated filling of the gap areas under the same structure arranged side-by-side, and because they are all of the same structure, the overall repeatability is better, so that the control of the operation rate and the volume of dispensing adhesive of the adhesive outlet of the adhesive potting device along the single first main trajectory 410 is also simpler without adjustment, which reduces the manipulation difficulty of the adhesive potting device as well as the design difficulty of the adhesive potting process and/or adhesive potting trajectory. Therefore, the present invention, by combining the arrangement manner of the battery units 210 of the battery assembly 2, determines that the adhesive outlet of the adhesive potting device performs the above-described adhesive potting operation along the second preset trajectory 4, and due to the fact that a single trajectory of the first main trajectory 410 passes through the same structural area with a better repeatability of the surface features, it is possible to realize the saturated filling of the above-described second cavity 122, and to realize an effective potting of a narrow gap, and to improve the potting effect.

In addition, it should be noted that a total adhesive potting time of filling the foam adhesive 9 in the second cavity 122 along the second preset trajectory 4 can be broken down into specific individual potting trajectories and times on each row or column of battery assembly 2 of the second preset trajectory 4, i.e., it should be noted that the plurality of first main trajectories 410 of the above-mentioned second preset trajectory 4 may be designed to be of equal lengths, equal filling time, as per practical needs, or may be designed to be of unequal lengths and different filling times, or even the adhesive potting trajectory can be a straight line or an arc. Similarly, the lengths and times of the plurality of first turning trajectories 420 of the second preset trajectory 4 can be adjusted according to the need, generally 0.1~0.5s, and the determining factor is the adhesive potting flow rate of the adhesive outlet of the adhesive potting device and the flow spreading ability of the potting adhesive in the state of the actual viscosity of the potting adhesive, to achieve the saturated filling of the above-mentioned second cavity 122, to realize the effective potting within the narrow gap, and to improve the potting effect.

In addition, as illustrated in FIG. 6, since each column of the first main trajectory 410 of the second preset trajectory 4 passes through, for example, the pole post 211, the surface area 212, the first gap 250, and the adhesive injection port 221, etc., but since the sizes of the gap areas formed by the surface features at the different structural areas are different, for this reason, the length of each column of the first main trajectory 410 is designed to be the same but the potting time of each column of the first main trajectory 410 is different depending on the volume of foam adhesive required for filling the gap area formed by the surface feature at the corresponding structural area. For example, in the present invention, the potting time of a trajectory of the plurality of first main trajectories 410 that passes through the adhesive injection port 221 and the first gap 250 is the longest, to enable saturated filling of the third gap 270 and the first gap 250; and the length and operation time of the plurality of first turning trajectories 420 on the surface of each column of battery units 210 can be different depending on the specific design of volume of the localized area needing to be filled, whereas from the consideration of the dimension of the whole column of battery units 210, the design of the plurality of first turning trajectories 420 can be the same due to the essentially same surface state on each column of battery units 210.

The specific structure of the above-mentioned busbar assembly 220 is not specifically limited by the present invention, for example, any well-known CCS (Cells Contact System) integrated busbar structure in the related art can be used, for example, including a plastic bracket, a metal busbar, an FPC/NTC sampling component, etc., which is not specifically limited by the present invention, and the person skilled in the art can adaptively design and protect the weak components of the busbar assembly 220, such as the NTC temperature sensor and sampling solder joints, by wrapping the busbar assembly 9, according to practical application requirements, to realize the saturated filling of all the gap areas between the busbar assembly 220 and the battery unit 210, and at the same time, the foam adhesive 9 touches an inner side of the cover 3 with a sufficient area to form the structural strength, to realize the overall structural design of the battery pack.

In addition, in the actual potting process, when controlling the adhesive outlet of the adhesive potting device to perform the adhesive potting operation along the second preset trajectory 4, due to the unevenness of the surface of the busbar assembly 220, as well as the different spaces corresponding to the underside of the busbar assembly 220, the spreading width of a potting adhesive volume of a different single-trajectory on the surface of the busbar assembly 220 is very limited. According to the results of the actual measurement of the single-trajectory potting with different adhesive potting rate of the adhesive outlet device, the width of the busbar assembly 220 covered by the single-trajectory is only 1/6~1/3 of the length of the upper surface of the corresponding battery unit 210 (reference may be made to the left-and-right direction of the drawing surface in FIG. 4), i.e., in order to realize that there is an adhesive liquid coverage on the upper surface of the busbar assembly 220, the number of turns on the design of each column of the battery units 210 is 2~5, and the number of turns of the whole battery assembly 2 can reach dozens of times. Because the precise accounting of the adhesive potting time is concentrated in the plurality of first main trajectories 410, usually the time for the plurality of first turning trajectories 420 is designed to be as short as possible, in order to reduce negative impact on the potting of the whole pack due to additional introduction of the turn, according to program setup accuracy of the adhesive potting device, the time for the turn is usually designed to be 0.1~0.2s, but in the actual process of the adhesive potting operation, due to the self-weight and operation inertia of the robotic arm of the adhesive potting device, each turn involves two changes in direction and two accelerations and decelerations, and the actual operation time of the robotic arm at the turn is much longer than 0.2s, and the measured time is close to 0.4s~1s, in conjunction with the fact that the upper surface of the whole battery assembly 2 has a large number of turns, which results in the actual adhesive potting volume being significantly higher than the designed adhesive volume. Furthermore, the extra adhesive liquid is concentrated at the two ends of the plurality of first main trajectories 410, and the abnormal accumulation of adhesive liquid will affect the problem of insecure fitting of the cover 3 of the battery pack.

In order to solve the above-described problem of the adhesive liquid being concentrated at the two ends of the plurality of first main trajectories 410, in some embodiments, as illustrated in FIG. 6, the first main trajectory 410 has a first end 411 and a second end 412 opposite each other, and the battery assembly 2 has a first side wall 230 adjacent to the first end 411 and a second side wall 240 adjacent to the second end 412 along a thickness direction, and the first end 411 has a first preset distance from the first side wall 230, the second end 412 has a second preset distance from the second side wall 240, and the value of the first preset distance and the second preset distance are determined according to difference between the actual operation time and a set operation of the adhesive outlet of the adhesive potting device at the first turning trajectory 420. By way of example, the thickness of the battery unit 210 is D, and the value of the first preset distance and the second preset distance is D', and D' ≥ D* 1/2, and D' ≤ 3D, so that the above-described design of the first main trajectory 410 above the battery assembly 2 is optimized by a certain distance inwardly along the thickness direction of the battery unit 210 at a turn, i.e., optimized to the above-described value D' of the first preset distance and the second preset distance, and D' ≥ D* 1/2, and D' ≤ 3D, so that the adhesive liquid of the foam adhesive 9 is uniformly spread above the battery assembly 2 by the inertia of foam adhesive 9 sprayed out of the adhesive outlet of the potting device along the thickness direction of the battery unit 210, which solves the problem of an the abnormal increase and accumulation of the adhesive liquid at the two ends of the plurality of first main trajectories 410 due to the increased trajectory operation time at the turn caused by the fact that an actual operation time of the potting device when turning along the second preset trajectory 4 is significantly longer than the set time.

In addition, after determining the value of the first preset distance and the second preset distance as described above, the method for potting the battery pack further includes: calibrating the value of the first preset distance and the second preset distance according to the flow field simulation and/or the experimental design to verify practicability of the first preset distance and the second preset distance.

Based on the above description, the cause of the above problem that the actual adhesive potting volume is significantly more than the designed adhesive volume, and the extra adhesive liquid is concentrated at the two ends of a plurality of first main trajectories 410, which makes an abnormal accumulation of adhesive liquid affect the poor fitting of the cover of the battery pack, is that the robotic arm of the potting device spends a longer time than the designed value at the actual first turning trajectory 420, and in order to solve the above problem, the present invention accurately accounts for each trajectory, in particular, accurately collects the actual operation time of each first turning trajectory 420 by means of analysis such as stopwatch or video slow playback, by using the designed trajectory program to run empty without dispensing the adhesive and compares it with the designed value of each trajectory for adhesive potting.

The difference between the actual operation time and the designed time of each trajectory has two manifestations: specifically, the actual operation time of the first main trajectory 410 deviates from the designed time, usually a linear speed of the robotic arm is as high as a few meters per second, and the design operation speed of the single first main trajectory 410 will not exceed the upper limit of the speed of the robotic arm, so by adjusting the trajectory setup time in the robotic arm operation program and accounting for the corresponding actual operation time, iterating and verifying repeatedly, the actual operation time of each first main trajectory 410 can eventually be made to be consistent with the design potting time accounted for by the adhesive volume;

In addition, with respect to the first turning trajectory 420, there is a minimum value of the actual operation turning time of the localized area, which is related to the self-weight and the drive motor of the robotic arm, and is usually in the range of 0.4s~1s, which is usually significantly longer than the designed turning time. In order to solve the problem of the actual operation turning time of the localized area of the first turning trajectory 420 being longer than the designed turning time, by accurately accounting for the actual trajectory operation time of each first turning trajectory 420 and taking an average value, the present invention recalibrates the adhesive potting trajectory parameter of the upper surface of each row or column of battery units 210 according to the actual operation time of each first turning trajectory 420. In the present invention, when the adhesive potting operation is performed along the second preset trajectory 4, the excess of the actual operation time of each first turning trajectory 420 compared to the designed time is bisected and subtracted from the times of the neighboring first main trajectories 410, respectively, while the length of the first main trajectory 410 is correspondingly shortened by a length corresponding to the subtracted time;

In practice, considering that the adhesive liquid after leaving the robotic arm has inertia, the inertia will promote the spreading of the adhesive liquid along the thickness direction of the battery unit 210. This part of impact can be summarized through the flow field simulation or the adhesive potting DOE validation of the battery assembly 2 to summarize the law. The impact data is superimposed on the corrected theoretical turning position trajectory parameter after calculation, to get the final second preset trajectory 4 above the battery assembly 2, which can ensure that the foam adhesive liquid is spread uniformly on the upper surface of the battery assembly 2. Furthermore, after several rounds of simulation optimization plus test verification, under the parameters of the conventional potting device, the design of the first main trajectory 410 above the battery assembly 2 is optimized by a certain distance inwardly along the thickness direction of the battery unit 210 at the turn, i.e., optimized to the value D' of the first preset distance and the second preset distance described above, and D'≥D * 1 /2, and D' ≤ 3D, solving the problem of adhesive stacking and uneven distribution of adhesive liquid at the edge of the battery assembly 2.

In some embodiments, as illustrated in FIGS. 4 and 5, the pre-potted structure 910 is located in the first cavity 121, and the post-potted structure 920 includes a second post-potted structure 922 located in the third cavity 123 and above the pre-potted structure 910; filling the accommodating chamber 120 with the foam adhesive 9 for a plurality of times to form the pre-potted structure 910 formed by the at least one filling of the foam adhesive 9 and the post-potted structure 920 formed by the at least one filling of the foam adhesive 9 further includes: filling the foam adhesive 9 in the first cavity 121 and the third cavity 123 along a third preset trajectory to form the second post-potted structurev922. Thus, by filling the foam adhesive 9 in the second cavity 122 along the second preset trajectory 4 described above to form the first post-potted structure 921 and by filling the foam adhesive 9 in the first cavity 121 and the third cavity 123 along the third preset trajectory described above to form the second post-potted structure 922, which can realize the saturated potting and filling of the area above and around the battery assembly 2, help to ensure that the battery assembly 2 is stably connected to the cover 3 through the post-potted structure 920 formed by the first post-potted structure 921 and the second post-potted structure 922, effectively improve the structural strength of the whole battery pack as well as the structural design of the whole pack, and promote the structuring process of battery pack.

The adhering area between the post-potted structure 920 and the cover 3 accounts for more than 90% of the inner wall face of the cover 3, and it is ensured that the adhering strength of the post-potted structure 920 is greater than 0.7 MPa, to ensure that the battery assembly 2 is stably connected to the cover 3 through the post-potted structure 920.

It should be noted that, in order to reduce the abnormal flow of the adhesive liquid to other areas, in some embodiments, as illustrated in FIG. 4, the battery pack may also include a first blocking structure 5, and the first blocking structure 5 is configured to separate the first cavity 121, the second cavity 122, and the third cavity 123 described above, to reduce occurrence of the abnormal flow of the adhesive liquid between the first cavity 121, the second cavity 122, and the third cavity 123 described above before the adhesive liquid expands and cures, which ensures uniform distribution of the adhesive liquid, and improves the potting effect.

In addition, in some embodiments, as illustrated in FIG. 4, the battery pack may further include a second blocking structure 6, and the second blocking structure 6 is configured to separate at least a part of the first cavity 121 and/or at least a part of the third cavity 123 into a plurality of sub-filling cavities 124, to further improve the distribution uniformity of the adhesive liquid within the first cavity 121 and the third cavity 123, the consistency of the foam adhesive 9 after rising, and reproducibility of industrial production.

The present invention does not specifically limit the specific structure of the first blocking structure 5 and the second blocking structure 6 described above, for example, they may be foam or rubber blocks, etc., with the purpose of being able to realize that it is sufficient to separate the first cavity 121, the second cavity 122, and the third cavity 123 described above from each other and to separate a plurality of sub-filling cavities within the first cavity 121 and the third cavity 123. In addition, the present invention also does not specifically limit the specific number of arrangements of the first blocking structure 5 and the second blocking structure 6 constructed as, for example, blocking foam or blocking rubber blocks described above, and the person skilled in the art may adaptively design the specific number of arrangements of the blocking foam or the blocking rubber blocks according to the actual application requirements.

In some embodiments, the third preset trajectory described above may be a loop trajectory extending along the circumferential direction of the battery assembly 2 to enable an adhesive potting operation of the third cavity 123 and the remaining part of the first cavity 121 above the pre-potted structure 910 that is not filled with the foam adhesive 9. The loop trajectory may include but is not limited to a circular trajectory, a rectangular trajectory, an elliptical trajectory, or any irregular circumferentially closed trajectory.

In addition, the method for potting the battery pack further includes: after filling the foam adhesive 9 in the second cavity 122 along the second preset trajectory 4, filling the foam adhesive 9 in the first cavity 121 and the third cavity 123 along the third preset trajectory. It should be noted that the rising speed of the foam adhesive 9 is greatly affected by the temperature, and the higher the temperature is, the faster the rising speed is. In the present embodiment, since the area where the second cavity 122 is located has a large spreading area along the X-direction and Y-direction of FIG. 4, after filling the foam adhesive 9 in the second cavity 122, the spreading area of the foam adhesive 9 is accordingly large, and thus the heat dissipation area in contact with the air is large. In addition, the gap between the battery assembly 2 and the cover 3 decreases, and the adhesive volume of the foam adhesive 9 between the battery assembly 2 and the cover 3 is small, and the accumulated heat is small. Compared to the second cavity 122, since the area where the first cavity 121 and the third cavity 123 are located has a small spreading area along X-direction and Y-direction of FIG. 4, but a large total volume, after filling the foam adhesive 9 in the first cavity 121 and the third cavity 123, the accumulation of a large amount of foam adhesive 9 in the first cavity 121 and the third cavity 123 is not conducive to the heat dissipation from the foam adhesive 9, and will cause the foam adhesive 9 to have a high internal temperature, and thus the rising time of the foam adhesive 9 at the first cavity 121 and the third cavity 123 is shorter than the rising time of the foam adhesive 9 at the second cavity 122. The present invention may fill the foam adhesive 9 in the second cavity 122, and then fill the foam adhesive 9 in the first cavity 121 and the third cavity 123. The starting time of the rising of the foam adhesive 9 in the second cavity 122 is identical or close to the starting time of the rising of the foam adhesive 9 in the first cavity 121 and the third cavity 123, ensuring the stability of the adhesive potting process.

Before filling the foam adhesive in the second cavity 122 along the second preset trajectory 4, it may also include: performing trial operation of the adhesive potting device along the second preset trajectory 4 and the third preset trajectory 5, for example, debugging the second preset trajectory 4, the third preset trajectory, the movement rate of the adhesive outlet of the adhesive potting device, and so on, and the adhesive potting device may not dispense the adhesive during the trial operation, so that after ensuring that the parameters of the trajectory as well as the movement rate, and so on, are correct, the second potting operation can be formally carried out, which helps to control the adhesive potting device to carry out the adhesive potting operation in the second cavity 122, the third cavity 123, and the remaining part of the first cavity 121 above the pre-potted structure 910 that is not filled with the foam adhesive 9 in accordance with the predetermined second preset trajectory 4, the third preset trajectory and the movement rate of the adhesive outlet of the adhesive potting device.

In addition, in some embodiments, the method for potting the battery pack may include: after the foam adhesive 9 forming the pre-potted structure 910 rises to a maximum volume, starting to fill the foam adhesive 9 in the first cavity 121 and the third cavity 123 along a third preset trajectory. By way of example, the field operator may start to fill the foam adhesive 9 in the first cavity 121 and the third cavity 123 along the third preset trajectory after the foam adhesive 9 forming the pre-potted structure 910 rises to a maximum volume and before the top face of the pre-potted structure 910 is surface-dried (surface-dried can be understood as a stage of reaching surface dry at the adhesive surface of the foam adhesive 9, and surface-undried means that the adhesive surface of the foam adhesive 9 is not completely dry and has adhesive), to ensure that the adhesive interface between the pre-potted structure 910 and the post-potted structure 920 has a high adhesive strength.

Of course, it should be noted that the field operator may continue to fill the foam adhesive 9 in the first cavity 121 and the third cavity 123 along the third preset trajectory after the foam adhesive 9 forming the pre-potted structure 910 rises to the maximum volume and after the top face of the pre-potted structure 910 is surface-dried (surface-dried can be understood as a stage of reaching surface dry at the adhesive surface of the foam adhesive 9, and surface-undried means that the adhesive surface of the foam adhesive 9 is not completely dry and has adhesive). The present invention does not specifically limit such deformation ways, and the person skilled in the art can adaptively design them according to the actual application requirements...

In some embodiments, an adhesive agent may also be added at the adhering interface between the pre-potted structure 910 and the post-potted structure 920 to improve the adhering strength at the adhering interface between the pre-potted structure 910 and the post-potted structure 920.

It should be noted that after the foam adhesive 9 forming the pre-potted structure 910 described above rises to the maximum volume, the operator can immediately proceed to fill the foam adhesive 9 in the second cavity 122 along the second preset trajectory 4 to form the first post-potted structure 921, or, when the foam adhesive 9 for the pre-potted structure 910, for example, does not rise to the maximum volume, the operator can adaptively carry out the adhesive potting operation in the second cavity 122 between the battery assembly 2 and the cover 3 in advance to form the first post-potted structure 921 (which will be described below). In this case, the foam adhesive 9 in the first cavity 121 continues to rise, and after the adhesive potting operation in the second cavity 122 is completed and the foam adhesive 9 in the first cavity 121 rises to the maximum volume, the accommodating chamber 120 can be continued to be potted with the adhesive to form a second post-potted structure 921 (which will be described below), which helps to save the manufacturing time of the whole battery pack in the field and improve the production efficiency.

It should be noted that, after the completion of the adhesive potting operation of the second cavity 122, the third cavity 123 and the remaining part of the first cavity 121 above the pre-potted structure 910 that is not filled with the foam adhesive, it is usually required to complete assembly process of the whole battery pack, such as the cover fitting operation, the placing of pressure retaining fixture, and the installation and tightening of the sealing bolt to the junction of the cover 3 and the case 1, before the foam adhesive 9 rises, or at the latest, before the foam adhesive 9 rises and touches the inner side wall of the cover 3, so that the above mentioned adhesive potting operation of the whole battery pack is completed.

The present invention describes a method for potting a battery pack in an embodiment.

A trial operation of the adhesive potting device is performed along the first preset trajectory, during the trial operation, the adhesive potting device does not dispense the adhesive;
prior to fitting the cover 3, the two first cavities 121 are filled with the foam adhesive 9 along the first preset trajectory, to form the pre-potted structure 910 by free rising of the foam adhesive 9;
a trial operation of the adhesive potting device is performed along the second preset trajectory 4 and third preset trajectory, during the trial operation, the adhesive potting device does not dispense the adhesive;
the second cavity 122 is filled with the foam adhesive 9 along the second preset trajectory 4 to form the first post-potted structure 921, in which the second preset trajectory 4 is determined according to the arrangement manner of battery units 210 of the battery assembly 2, the second preset trajectory 4 includes a first main trajectory 410 and a first turning trajectory 420, a plurality of first main trajectories 410 extend along the thickness direction of the battery unit 210 and arranged side-by-side along the length direction of the battery unit 210, and adjacent two first main trajectories 410 are connected through the first turning trajectory 420, such that the second preset trajectory 4 forms a serpentine trajectory; the first main trajectory 410 has a first end 411 and a second end 412 opposite each other, the battery assembly 2 has a first side wall 230 adjacent to the first end 411 and a second side wall 240 adjacent to the second end 412, the first end 411 has a first preset distance from the first side wall 230, the second end 412 has a second preset distance from the second side wall 240, the value of the first preset distance and the second preset distance is determined according to a difference between an actual operation time and a set operation of the adhesive outlet of the adhesive potting device at the first turning trajectory 420; the value of the first preset distance and the second preset distance is calibrated according to the flow field simulation and/or the experimental design;
after filling the foam adhesive 9 in the second cavity 122 along the second preset trajectory 4, after the foam adhesive 9 forming the pre-potted structure 910 rises to the maximum volume, and before the top face of the pre-potted structure 910 is surface-dried, starting to fill the foam adhesive 9 in the first cavity 121 and the third cavity along the third preset trajectory to form the second post-potted structure 922;

The cover 3 is installed and pressure is held using an existing pressure retaining fixture to allow the battery assembly 2 to be connected to the cover 3 through the post-potted structure 920 after the rising of the foam adhesive 9 is completed, and the pre-potted structure 910 and the cover 3 are filled with the post-potted structure 920 between them, and connected through the post-potted structure 920.

According to a second aspect of the present invention, there is provided a battery pack. The battery pack employs the method for potting a battery pack of the first aspect described above, to solve the problem of poor fitting between the cover and the case of the battery pack that is prone to occur after the battery pack is potted in the related art, and to effectively improve the achievability and the process stability of the potted design of the whole battery pack. In addition, the battery pack has all the beneficial effects of the method for potting the battery pack provided in the first aspect described above, and the present invention will not be repeated herein.

According to a third aspect of the present invention, there is provided a battery pack. The battery pack includes a case 1, a battery assembly 2, a cover 3, a pre-potted structure 910 and a post-potted structure 920. The case 1 includes an accommodating chamber 120 having an opening 110, the battery assembly 2 is located in the accommodating chamber 120, and the cover 3 closes the opening 11; the pre-potted structure 910 is formed by foam adhesive 9 and located in the accommodating chamber 120; the post-potted structure 920 is formed by the foam adhesive 9 and located in the accommodating chamber 120; and the battery assembly 2 is connected to the cover 3 through the post-potted structure 920.

By means of the above technical solution, i.e., the battery pack provided by the third aspect of the present invention, the battery pack forms the pre-potted structure 910 formed and the post-potted structure 920 by filling the foam adhesive 9 in the accommodating chamber 120 in several times, and the battery assembly 2 is stably connected to the cover 3 through the post-potted structure 920, which effectively improves the structural strength of the whole battery pack as well as facilitates the structural design of the whole pack, helps to improve the insulation performance of the whole pack as well as the consistency of thermal management and thermal safety, reduces the problem of poor fitting between the cover and the case of the battery pack that is prone to occur, for example, after the battery pack is plotted in the related art, and improves the achievability and process stability of the design of the whole pack of the battery pack.

In addition, since the present invention can realize saturated potting and filling of each gap area in the battery pack by filling the accommodating chamber 120 of the battery pack with the foam adhesive 9 in several times, the potting effect is improved, which helps to improve the structural strength of the whole battery pack.

It should be noted that the cover 3 of the battery pack described above may also be constructed as a part of a floor of a vehicle body to realize an integrated design of the cover 3 of the battery pack with the floor of the vehicle body.

In some embodiments, a projection of the post-potted structure 920 in the height direction of the battery pack may cover the pre-potted structure 910 to realize that the battery assembly 2 is adhered to the case 1 through the pre-potted structure 910, the battery assembly 2 is adhered to the cover 3 through the post-potted structure 920, and the pre-potted structure 910 and the post-potted structure 920 are adhesive-connected through the adhesive surface of the foaming adhesive 9 after the free rising, or it is also possible that an adhesive agent is added between, for example, the pre-potted structure 910 and the pre-potted structure 920 to ensure a high connection reliability, which is not specifically limited by the present invention.

In addition, in some embodiments, an adhering strength at the adhering interface between the pre-potted structure 910 and the post-potted structure 920 is E, an adhering strength of the post-potted structure 920 and the cover 3 is F, and E>F. In this way, since the adhering area between the post-potted structure 920 and the cover 3 is much greater than the area of the adhering interface between the pre-potted structure 910 and the post-potted structure 920, it is easier to generate a stress concentration at the adhering interface between the pre-potted structure 910 and the post-potted structure 920 than at the connection between the post-potted structure 920 and the cover 3. Thus, in the present invention, the adhering strength E at the interface between pre-potted structure 910 and the post-potted structure 920 is greater than the adhering strength F of the post-potted structure 920 and the cover 3, which can improve the adverse effects caused by the stress concentration. In addition, the adhering strength E at the interface of the pre-potted structure 910 and the post-potted structure 920 is greater than the adhering strength F of the post-potted structure 920 and the cover 3, it is also possible that, even if the cover 3 and the potting adhesive are degummed, the case 1, the battery assembly 2, the pre-potted structure 910, the post-potted structure 920, and the busbar assembly 220 are still a single integral structure, which effectively protects the structural stability and safety of the battery pack.

In addition, in some embodiments, the draw/shear strength at the interface of the pre-potted structure 910 and the post-potted structure 920 is A, and the draw/shear strength of the potting structure formed by the foam adhesive 9 with no interface is B, and A > 0.5B, to ensure that the adhering interface between the pre-potted structure 910 and the post-potted structure 920 has a high adhering strength.

In addition, in some embodiments, as illustrated in FIGS. 4 and 5, the battery assembly 2 may include a battery unit 210, the accommodating chamber 120 has a first cavity 121 located on at least one end of the battery assembly 2 in a first direction (reference may be made to a left-and-right direction in the drawing surface of FIG. 4), and the pre-potted structure is at least partially located in the first cavity 121, to achieve the purpose of pre-potting, which can effectively reduce the volume of remaining spatial area in the battery pack that needs to be filled with the foam adhesive 9, effectively shorten the adhesive potting time used for the adhesive volume required for filling the post-potted structure 920, and reduce the occurrence of the problem of poor fitting of the cover 3.

It should be noted that the battery assembly 2 may be placed in the accommodating chamber 120 in the case 1 such as in a positive or inverted manner. By way of example, FIG. 4 illustrates that after assembly of the battery assembly 2 and the case 1 is completed, the accommodating chamber 120 may form two first cavities 121 located at two opposite ends of the battery assembly 2 in the first direction, i.e., a vehicle front end cavity 7 located at a left side and a vehicle rear end cavity 10 located at a right side as illustrated in FIG. 4. Simultaneously, the accommodating chamber 120 further forms two third cavities 123 located at two opposite ends of the battery assembly 2 in the second direction, i.e., the gap areas located at the side faces of the battery assembly 2 as illustrated in FIG. 4. A volume of the spatial area that needs to be filled with the foam adhesive of the two first cavities 121 (e.g., the vehicle front end cavity 7 and the vehicle rear end cavity 10) is greater than a volume of the spatial area that needs to be filled with the foam adhesive of the two third cavities 123 (e.g., the gap areas of the side faces of the battery assembly 2). Thus, the pre-potting is performed in the vehicle front end cavity 7 and the vehicle rear end cavity 10 having the relatively large volume of the spatial area that needs to be filled with the foam adhesive 9 first, which can effectively reduce the volume of remaining spatial area in the battery pack that needs to be filled with the foam adhesive 9 to achieve the purpose of effectively shortening the adhesive potting time used for the adhesive volume required for filling the post-potted structure 920, reduce the occurrence of the problem of poor fitting of the cover 3, improve the achievability and process stability of the potting design of the whole battery pack, and effectively improve the structural strength of the whole battery pack as well as facilitate the structural design of the whole pack.

In addition, considering that during the pre-potting operation of the two first cavities 121, since the foam adhesive 9 is usually a fluid adhesive liquid in a liquid form when injected into the first cavities 121 and before the foam adhesive 9 rises, in order to minimize the possibility of the adhesive liquid flowing abnormally to other areas (e.g., the second cavity 122 between the battery assembly 2 and the cover 3), in some embodiments, in the height direction of the battery pack (reference may be made to a direction perpendicular to the drawing surface of FIG. 4), the highest point of the top face of the pre-potted structure 910 is located below the top end of the battery unit 210, or the highest point of the top face of the pre-potted structure 910 is flush with the top end of the battery unit 210, to minimize the occurrence of the problem of the adhesive liquid abnormally flowing to other areas, to ensure that the adhesive liquid is uniformly distributed, and to improve the potting effect.

In addition, considering that in order to be able to better realize potting in several times to achieve the purpose of shortening, for example, the adhesive potting time used for the last adhesive potting, in some embodiments, the distance between the lowest point of the top face of the pre-potted structure 910 and the top end of the battery unit 210 in the height direction of the battery pack (reference may be made to the direction perpendicular to the drawing surface of FIG. 4 or the up-and-down direction in the drawing surface of FIG. 5) may be h, and the size of the battery unit 210 in the height direction of the battery pack (reference may be made to the direction perpendicular to the drawing surface of FIG. 4 or the up-and-down direction in the drawing surface of FIG. 5) may be H, and h ≤ H * 1/2. Thus, the position of the lowest point of the top face of the pre-potted structure is controlled to facilitate the realization of potting in several times to achieve the purpose of shortening
the adhesive potting time used for the last adhesive potting, which improves the achievability and process stability of the potting design of the whole battery pack, and effectively improves the structural strength of the whole battery pack as well as facilitates the structural design of the whole pack.

In addition, in some embodiments, a size of the accommodating chamber 120 in the height direction of the battery pack may be H', a height of the highest point or the lowest point of the top face of the pre-potted structure 910 relative to the inner bottom face of the accommodating chamber 120 is L, and L≥H'*1/3. Thus, after the pre-potting operation, the volume of the remaining spatial area in the battery pack that needs to be filled with the foam adhesive 9 can be effectively reduced, to achieve the purpose of effectively shortening the adhesive potting time used for the adhesive volume required for filling the post-potted structure 920.

By way of example, in some embodiments, the size of the battery unit 210 of the battery assembly 2 in the height direction of the battery pack is H, it is possible to make H'* 1/2<L<H, to facilitate the adhesive potting operation in the field, and to achieve that the adhesive potting time used for the adhesive volume required for filling the post-potted structure 920. In addition, for structuring and lightweight design of the whole battery pack, in some embodiments, when a size of the battery unit 210 of the battery assembly 2 in the height direction of the battery pack is H, it is possible to make H ≥ H'*2/3, to facilitate structuring and lightweight design of the whole battery pack.

In addition, considering that the adhesive liquid has fluidity, when filling the adhesive liquid above the pre-potted structure 910, if a large depression exists on the top face of the pre-potted structure 910, it will make the adhesive liquid flow to the depression, resulting in the accumulation of the adhesive liquid, leading to a poor uniform distribution of the adhesive liquid, and when the adhesive liquid adopts the foam adhesive 9, the foam adhesive 9 will rise and expand to form a part of the post-potted structure 920, which will make the top face of the post-potted structure 920 more uneven, thus making the adhesive area of the post-potted structure 920 and the cover 3 smaller. Thus, in embodiments provided in the present invention, a distance between the highest point and the lowest point of the top face of the pre-potted structure 910 in the height direction may be less than a preset distance, and for example, the preset distance may be 10 mm or 15 mm. Thus, the flatness of the top face of the pre-potted structure 910 may be made to meet the requirements, to make it possible to reduce the flow of the adhesive liquid when the adhesive liquid is filled on the top face of the pre-potted structure 910, to improve the uniform distribution of the adhesive liquid. Thus, after the adhesive liquid rises to form a part of the post-potted structure 920, an adhering area between the part of the post-potted structure 920 and the cover 3 may be increased, to ensure that the adhering interface between the pre-potted structure 910 and the post-potted structure 920 has a high adhering strength, and to improve the structural strength of the whole battery pack.

In addition, in some embodiments, as illustrated in FIGS. 4 and 5, the accommodating chamber 120 may include a second cavity 122 located between the battery assembly 2 and the cover 3 and between adjacent battery units 210 in the battery assembly 2, and a third cavity 123 located on at least one end of the battery unit 210 in a second direction, and the post-potted structure 920 includes a first post-potted structure 921 located in the second cavity 122, and a second post-potted structure 922 located in the third cavity 123 and above the pre-potted structure 910. In this way, the first post-potted structure 921 and the second post-potted structure 922 can realize saturated potting and filling at an area above and around the battery assembly 2 (at the third cavity 123 and the remaining part of the first cavity 121 above the pre-potted structure 910 that is not filled with the foam adhesive 9) , which helps to ensure that the battery assembly 2 is stably connected to the cover 3 through the post-potted structure 920 formed by the first post-potted structure 921 and the second post-potted structure 922, and effectively improves the structural strength of the whole battery pack and facilitates the structural design of the whole pack.

In addition, in some embodiments, the density of the first post-potted structure 921, the second post-potted structure 922, and the pre-potted structure 910 becomes smaller sequentially. By way of example, as illustrated in FIGS. 4 and 5, the second post-potted structure 922 includes a first structure 9221 located in the third cavity 123, and a second structure 9222 located above the pre-potted structure 910, and the density of the first post-potted structure 921, the first structure 9221, the second structure 9222, and the pre-potted structure 910 becomes smaller sequentially, which effectively improves the structural strength of the whole battery pack as well as facilitates the structural design of the whole pack, and helps to improve the insulation performance of the whole pack as well as to improve the consistency of the thermal management and thermal safety.

In some embodiments, as illustrated in FIG. 4, the battery pack may also include a first blocking structure 5, and the first blocking structure 5 is configured to separate the first cavity 121, the second cavity 122, and the third cavity 123 described above, to reduce occurrence of the abnormal flow of the adhesive liquid between the first cavity 121, the second cavity 122, and the third cavity 123 described above before the adhesive liquid expands and cures, which ensures uniform distribution of the adhesive liquid, and improves the potting effect.

In addition, in some embodiments, as illustrated in FIG. 4, the battery pack may further include a second blocking structure 6, and the second blocking structure 6 is configured to separate at least a part of the first cavity 121 and/or at least a part of the third cavity 123 into a plurality of sub-filling cavities 124, to further improve the distribution uniformity of the adhesive liquid within the first cavity 121 and the third cavity 123, the consistency of the foam adhesive 9 after rising, and reproducibility of industrial production.

Additionally, the battery pack provided by the third aspect of the present invention does not specifically limit the specific structure of the first blocking structure 5 and the second blocking structure 6 described above, for example, they may be blocking foam or blocking rubber blocks, etc., with the purpose of being able to realize that it is sufficient to separate the first cavity 121, the second cavity 122, and the third cavity 123 described above from each other and to separate a plurality of sub-filling cavities within the first cavity 121 and the third cavity 123. In addition, the battery pack provided by the third aspect of the present invention also does not specifically limit the specific number of arrangements of the first blocking structure 5 and the second blocking structure 6 constructed as, for example, blocking foam or blocking rubber blocks described above, and the person skilled in the art may adaptively design the specific number of arrangements of the blocking foam or the blocking rubber blocks according to the actual application requirements.

According to a fourth aspect of the present invention, there is provided an electrical device, including a battery pack provided by the second aspect described above, or the battery pack provided by the third aspect described above. The electrical device has all the beneficial effects of the battery pack provided by the second aspect described above or the battery pack provided by the third aspect described above, and the present invention will not be repeated herein.

In some illustrative application scenarios, the above electrical device may be a vehicle, the vehicle may be a new energy vehicle, and the new energy vehicle may be a battery electric vehicle, a hybrid electric vehicle, or a range-extended electric vehicle, etc., and the present invention is not specifically limited thereto.

Of course, in other application scenarios, the above-mentioned electrical device can also be, for example, carriers that need to be powered by a battery pack, such as in the field of energy storage, in aerospace or in waterway transportation.

## Claims

1. A method for potting a battery pack, the battery pack comprising a case (1), a battery assembly (2), and a cover (3), the case (1) comprising an accommodating chamber (120) having an opening (110), the battery assembly (2) being in the accommodating chamber (120), the cover (3) closing the opening (110), the method comprising:
filling the accommodating chamber (120) with a foam adhesive (9) for a plurality of times prior to installation of the cover (3) to form a pre-potted structure (910) formed by at least one filling of the foam adhesive (9) and a post-potted structure (920) formed by at least one filling of the foam adhesive (9), wherein the battery assembly (2) is connected to the cover (3) through the post-potted structure (920).

2. The method according to claim 1, wherein filling the accommodating chamber (120) with the foam adhesive (9) for the plurality of times to form the pre-potted structure (910) formed by at least one filling of the foam adhesive (9) and the post-potted structure (920) formed by at least one filling of the foam adhesive (9) comprises:
filling the foam adhesive (9) in at least a part of a space between the battery assembly (2) and a side wall of the accommodating chamber (120) to form the pre-potted structure (910).

3. The method according to claim 2, wherein the battery assembly (2) comprises a battery unit (210), the accommodating chamber (120) has a first cavity (121) located on at least one end of the battery assembly (2) in a first direction, and the pre-potted structure (910) is at least partially located in the first cavity (121).

4. The method according to claim 3, wherein the accommodating chamber (120) has a third cavity (123) located on at least one end of the battery assembly (2) in a second direction, and the first cavity (121) has a volume greater than a volume of the third cavity (123); or
in a height direction of the battery pack, a highest point of a top face of the pre-potted structure (910) is located below a top end of the battery unit (210), or a highest point of a top face of the pre-potted structure (910) is flush with a top end of the battery unit (210).

5. The method according to any one of claims 2 to 4, wherein filling the foam adhesive (9) in at least a part of the space between the battery assembly (2) and the side wall of the accommodating chamber (120) to form the pre-potted structure (910) comprises:
filling the foam adhesive (9) in the at least a part of the space along a first preset trajectory; or
wherein the pre-potted structure (910) is formed by free rising of the foam adhesive (9).

6. The method according to any one of claims 1 to 5, wherein the accommodating chamber (120) has a second cavity (122) located between the battery assembly (2) and the cover (3) and between adjacent battery units (210) of the battery assembly (2), and the post-potted structure (920) comprises a first post-potted structure (921) located in the second cavity (122); and
filling the accommodating chamber (120) with the foam adhesive (9) for the plurality of times to form the pre-potted structure (910) formed by at least one filling of the foam adhesive (9) and the post-potted structure (920) formed by at least one filling of the foam adhesive (9) comprises:
filling the foam adhesive (9) in the second cavity (122) along a second preset trajectory (4) to form the first post-potted structure (921),
wherein, preferably, the method further comprises:
determining the second preset trajectory (4) according to an arrangement manner of the battery units (210) of the battery assembly (2).

7. The method according to claim 6, wherein the battery assembly (2) comprises a plurality of groups of battery units (210) arranged side-by-side along a length direction of the battery unit (210), and each group of the battery units (210) comprises a plurality of battery units (210) arranged side-by-side along a thickness direction of the battery unit (210); and
the second preset trajectory (4) comprises a first main trajectory (410) and a first turning trajectory (420), a plurality of first main trajectories (410) extend along the thickness direction of the battery unit (210) and arranged side-by-side along the length direction of the battery unit (210), and two adjacent first main trajectories (410) are connected through the first turning trajectory (420) such that the second preset trajectory (4) forms a serpentine trajectory.

8. The method according to claim 7, wherein a first gap (250) is defined between two adjacent battery units (210) spaced apart along the length direction, the first gap (250) forms a part of the second cavity (122), the first gap (250) extends the thickness direction, and at least one first main trajectory (410) passes through the first gap (250);
an upper surface of the battery unit (210) is provided with a pole post (211) and a surface area (212) adjacent to the pole post (211), at least one first main trajectory (410) passes through the pole post (211), and at least one first main trajectory (410) passes through the surface area (212);
the battery assembly (2) comprises a busbar assembly (220) located above the battery unit (210), a second gap (260) is defined between the busbar assembly (220) and the cover (3), a third gap (270) is defined between the busbar assembly (220) and the battery unit (210), the busbar assembly (220) has an adhesive injection port (221) in communication with the second gap (260) and the third gap (270), and at least one first main trajectory (410) passes through the adhesive injection port (221); or
the first main trajectory (410) has a first end (411) and a second end (412) opposite each other, the battery assembly (2) has a first side wall (230) adjacent to the first end (411) and a second side wall (240) adjacent to the second end (412) along the thickness direction, the first end (411) has a first preset distance from the first side wall (230), and the second end (412) has a second preset distance from the second side wall (240).

9. The method according to any one of claims 6 to 8, wherein the accommodating chamber (120) has a first cavity (121) located on at least one end of the battery assembly (2) in a first direction, the accommodating chamber (120) has a third cavity (123) located on at least one end of the battery assembly (2) in a second direction, the pre-potted structure (910) is located in the first cavity (121), and the post-potted structure (920) comprises a second post-potted structure (922) located in the third cavity (123) and above the pre-potted structure (910);
filling the accommodating chamber (120) with the foam adhesive (9) for the plurality of times to form the pre-potted structure (910) formed by at least one filling of the foam adhesive (9) and the post-potted structure (920) formed by at least one filling of the foam adhesive (9) comprises:
filling the foam adhesive (9) in the first cavity (121) and the third cavity (123) along a third preset trajectory to form the second post-potted structure (922),
wherein, preferably, the third preset trajectory is a loop trajectory extending along a circumferential direction of the battery assembly (2).

10. The method according to claim 9, further comprising at least one of:
after filling the foam adhesive (9) in the second cavity (122) along the second preset trajectory (4), filling the foam adhesive (9) in the first cavity (121) and the third cavity (123) along the third preset trajectory;
after the foam adhesive (9) forming the pre-potted structure (910) rises to a maximum volume, starting to fill the foam adhesive (9) in the first cavity (121) and the third cavity (123) along the third preset trajectory; or
after the foam adhesive (9) forming the pre-potted structure (910) rises to a maximum volume and before the top face of the pre-potted structure (910) is surface-dried, starting to fill the foam adhesive (9) in the first cavity (121) and the third cavity (123) along the third preset trajectory.

11. A battery pack, comprising:
a case (1) comprising an accommodating chamber (120) having an opening (110);
a battery assembly (2) located in the accommodating chamber (120);
a cover (3) closing the opening (110);
a pre-potted structure (910) formed by foam adhesive (9) and located in the accommodating chamber (120); and
a post-potted structure (920) formed by foam adhesive (9) and located in the accommodating chamber (120), wherein the battery assembly (2) is connected to the cover (3) through the post-potted structure (920).

12. The battery pack according to claim 11, wherein a projection of the post-potted structure (920) in the height direction of the battery pack covers the pre-potted structure (910);
the pre-potted structure (910) and the post-potted structure (920) are adhered; or
an adhering strength at an interface of the pre-potted structure (910) and the post-potted structure (920) is E, an adhering strength of the post-potted structure (920) and the cover (3) is F, and E>F.

13. The battery pack according to claim 11 or 12, wherein the battery assembly (2) comprises a battery unit (210), the accommodating chamber (120) has a first cavity (121) located on at least one end of the battery assembly (2) in a first direction, and the pre-potted structure (910) is at least partially located in the first cavity (121);
wherein in a height direction of the battery pack, a highest point of a top face of the pre-potted structure (910) is located below a top end of the battery unit (210), or a highest point of a top face of the pre-potted structure (910) is flush with the top end of the battery unit (210); and
wherein a distance between a lowest point of the top face of the pre-potted structure (910) and the top end of the battery unit (210) in the height direction is h, a size of the battery unit (210) in the height direction is H, and h≤H*1/2; or
a size of the accommodating chamber (120) in the height direction of the battery pack is H' , a height of the highest point or a lowest point of the top face of the pre-potted structure (910) relative to an inner bottom face of the accommodating chamber (120) is L, and L≥H' *1/3, wherein a size of the battery unit (210) of the battery assembly (2) in the height direction of the battery pack is H, and H'*1/2<L<H, or a size of the battery unit (210) of the battery assembly (2) in the height direction of the battery pack is H, and H≥H' *2/3.

14. The battery pack according to claim 13, wherein the accommodating chamber (120) has a second cavity (122) located between the battery assembly (2) and the cover (3) and between adjacent battery units (210) of the battery assembly (2), and a third cavity (123) located on at least one end of the battery assembly (2) along the second direction, and the post-potted structure (920) comprises a first post-potted structure (921) located in the second cavity (122), and a second post-potted structure (922) located in the third cavity (123) and above the pre-potted structure (910);
wherein, preferably, a density of the first post-potted structure (921), the second post-potted structure (922), and the pre-potted structure (910) becomes sequentially smaller; and
wherein, preferably, the second post-potted structure (922) comprises a first structure (9221) located in the third cavity (123) and a second structure (9222) above the pre-potted structure (910); and the density of the first post-potted structure (921), the first structure (9221), the second structure (9222), and the pre-potted structure (910) becomes sequentially smaller.

15. An electrical device, comprising a battery pack according to any one of claims 11 to 14.
